# EUROPÄISCHE PATENTSCHRIFT

(11) **EP 0 418 197 B1**
(45) Veröffentlichungstag und Bekanntmachung des Hinweises auf die Patenterteilung: **16.06.1993**
(21) Anmeldenummer: 90810666.9
(22) Anmeldetag: 04.09.1990
(51) Int. Cl.: F16H 25/18, B25B 1/10, B30B 1/10, B25B 1/14

(54) **Kniehebelkraftverstärker**
Toggle link power amplifier
Démultiplicateur de puissance à genouillère

(30) Priorität: 13.09.1989 CH 3345/89
(43) Veröffentlichungstag der Anmeldung: 20.03.1991
(73) Patentinhaber: GREMOLITH AG, CH-9602 Bazenheid (CH)
(72) Erfinder: Schär, Paul, CH-9535 Wilen (CH)
(74) Vertreter: Hepp, Dieter

(56) Entgegenhaltungen:
- DE-A- 2 844 265
- DE-A- 3 305 275
- DE-B- 1 284 366
- DE-B- 1 295 301
- DE-B- 2 308 175
- DE-B- 2 517 687
- US-A- 4 044 623
- US-A- 4 524 630

## Beschreibung

Die Erfindung betrifft einen Kniehebelkraftverstärker gemäss Oberbegriff von Patentanspruch 1. Derartige Kniehebelkraftverstärker werden vor allem in Hohlspindeln von Maschinenschraubstöcken eingebaut. Sie haben sich dabei allgemein durchgesetzt.

Ein Kniehebelkraftverstärker dieser Bauart ist in der Deutschen Patentschrift Nr. 23 08 175 beschrieben. Gemäss dieser Patentschrift soll die Lagerreibung der Kniehebel dadurch reduziert werden, dass sämtliche Stützflächen für die Kniehebel, sowie die Kniehebel selbst derart konvex bzw. eben ausgebildet sind, dass die einander berührenden Flächen schlupffrei aneinander abwälzen. Dadurch soll der Verschleiss reduziert werden.

In der Praxis hat sich jedoch gezeigt, dass die Pfannen derartiger Kniehebellager ohne weiteres zuverlässig und dauerhaft geschmiert werden können, so dass bei den geringen Schwenkbewegungen derartiger Kniehebel die Lagerreibung an sich kein besonderes Problem ist. Statt dessen hat sich überraschend gezeigt, dass der Verschleiss und vor allem auch die Reibungsverluste hauptsächlich zwischen der Stützfläche des Spreizbolzens und dem Kniehebel auftreten. Dies umso überraschender, als man bisher davon ausgegangen ist, dass die im Niederdruckteil des Kniehebelkraftverstärkers auftretenden Reibungskräfte vernachlässigbar sind.

Bei einer anderen Gattung von Kraftverstärkern, bei denen sowohl im Niederdruckteil, als auch im Hochdruckteil Wälzlager vorgesehen sind, ist die maximal übertragbare Kraft durch die hohe Flächenpressung der punkt- oder linienförmig aufliegenden Wälzkörper beschränkt. Dies trifft auch für den Gegenstand der DE-A 28 44 265 zu, bei dem noch zusätzlich Reibung dadurch erzeugt wird, dass der Spreizbolzen die verdrängten Kugeln in einer Drehrichtung antreibt, die der Abwälzbewegung auf dem Drucklager des Hochdruckteils entgegengerichtet ist.

Der Erfindung liegt die Aufgabe zugrunde, die Nachteile des Bekannten zu vermeiden, insbesondere also einen Kniehebelkraftverstärker zu schaffen, der im Betrieb nur geringe Reibungsverluste aufweist, der verschleissarm ist und bei einfachem Aufbau wirtschaftlich hergestellt werden kann.

Erfindungsgemäss wird dies in erster Linie gemäss Kennzeichen der Patentansprüche erreicht.

Vor allem durch die Anordnung des keilförmigen Elements zur Kraftübertragung zwischen Spreizbolzen und Kniehebel lässt sich erreichen, dass im Bereich des Spreizbolzens, der einen relativ grossen Weg zurücklegt, Wälzlager zur Verringerung der Reibung vorgesehen werden können. Gleichzeitig wird dabei auf optimal einfache Weise gewährleistet, dass die auf die Kniehebel wirkende Spreizkraft ausschliesslich im rechten Winkel auf das Knie wirkt, so dass zusätzliche, durch Reibung verursachte Kräfte in Richtung des Knielagers vermieden werden. Diese Kräfte sind einerseits durch die Wälzkörper auf ein Minimum reduziert und werden andererseits durch das Kraftübertragungselement selbst aufgenommen.

Auf diese Weise lässt sich der Kraftverstärker vorteilhaft mit Lagerpfannen und Kniehebeln mit Rollenlagerung verwirklichen, was im Hinblick auf die grossen Lagerflächen zur ausserordentlich niedriger Flächenpressung führt.

Die Erfindung lässt sich auch vorteilhaft realisieren, wenn als Kniehebelelemente gekrümmte Federelemente vorgesehen werden, welche durch den Spreizbolzen auseinander gedrückt werden. Auf diese Weise fällt die Lagerreibung zwischen den beiden Kniehebeln im Kniebereich weg.

Besonders reibungsarm lässt sich der Kniehebelkraftverstärker realisieren, wenn das keilförmige Element zur Kraftübertragung auf der dem Hochdruckteil zugewandten Keilseite durch wenigstens einen Wälzkörper abgestützt ist.

Zur Uebertragung grosser Kräfte ist es vorteilhaft, wenn die Kniehebel als Scheiben ausgebildet sind. Dabei lassen sich vorteilhaft Kraftverstärker konstruieren, die nur aus einem Kniehebelpaar bestehen. Selbstverständlich lässt sich die Erfindung aber auch in konventioneller Weise z.B. mit drei oder mehr Kniehebelpaaren realisieren, ohne dass dabei der Gedanke der Erfindung verlassen würde.

Besonders einfach lässt sich der erfindungsgemässe Kniehebelkraftverstärker verwirklichen, wenn das Knie jedes Kniehebels aus einem Wälzkörper besteht, der beidseitig in je einer Pfanne in einem Kniehebel gelagert ist. Der Wälzkörper kann dabei derart seitlich über die Pfanne vorstehend ausgebildet werden, dass die Spreizkraft vom Kraftübertragungselement direkt auf den Wälzkörper übertragen wird.

Die Erfindung ist im folgenden in Ausführungsbeispielen anhand der Zeichnungen näher erläutert. Es zeigen:
- Figur 1: eine schematische Draufsicht auf einen Kniehebelkraftverstärker gemäss der Erfindung,
- Figur 2: eine Seitenansicht mit Teilschnitt durch den Kraftverstärker gemäss Figur 1,
- Figur 3: den Kraftverstärker gemäss Figur 2 mit Darstellung des Niederdruck- und des Hochdruckteils, und
- Figur 4: ein abgewandeltes Ausführungsbeispiel des Kraftverstärkers gemäss Figur 1 bis 3.

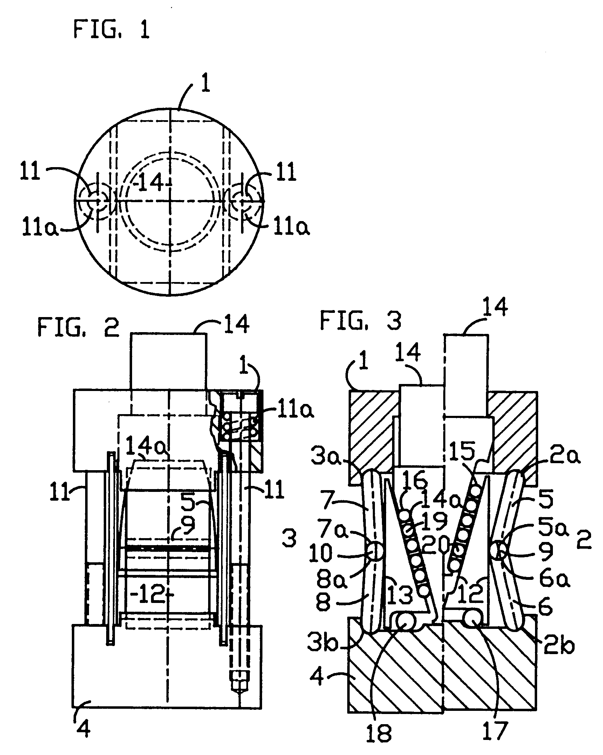

Der Kniehebelkraftverstärker gemäss Figur 1 bis 3 weist ein Widerlager 1 auf, an welchem sich zwei Kniehebelanordnungen 2, 3 in Pfannen 2a, 3a abstützen. Die Kniehebelanordnungen 2, 3 sind auf der anderen Seite in zwei Pfannen 2b, 3b in einem Drucklager 4 gelagert. Jede Kniehebelanordnung 2, 3 besteht aus einem Kniehebelpaar mit zwei Kniehebeln 5, 6, bzw. 7, 8. Die Kniehebel sind mit pfannenförmigen Vertiefungen 5a, 6a, 7a und 8a versehen, in denen jeweils ein zylindrischer Wälzkörper 9, 10 gelagert ist. Widerlager 1 und Drucklager 4 werden mittels Bolzen 11 und Vorspannfedern 11a unter Vorspannung zusammengedrückt, so dass die Kniehebel 5, 6, bzw. 7, 8 einerseits in den Pfannen 2a, 2b, bzw. 3a, 3b gehalten werden und andererseits unter Vorspannung gegen die Wälzkörper 9 bzw. 10 gepresst werden, wobei sich letzere jeweils an einem Kraftübertragungselement 12, 13 abstützen. Die Elemente 12, 13 sind auf ihrer Innenseite keilförmig und komplementär zur keilförmigen Druckfläche 14a eines Spreizbolzens 14 ausgebildet.

Zwischen jeder Druckfläche 14a des Spreizbolzens 14 und dem Element 12 bzw. 13 ist je ein aus einzelnen Wälzkörpern 15, 16 bestehendes Nadellager 19 bzw. 20 vorgesehen. Wie aus Figur 2 ersichtlich ist, erstreckt sich die keilförmige Druckfläche 14a über praktisch die gesamte Breite des Spreizbolzens 14. Wie am Beispiel des Kniehebels 5 angedeutet, sind auch die Kniehebel 5, 6, 7, 8, sowie der Wälzkörper 9 in gleicher Breite ausgebildet. Einerseits wird dadurch die Belastbarkeit der flachen, scheibenförmigen Kniehebel 5, 6, 7, 8 verbessert und andererseits wird durch die grosse Auflagefläche in den Pfannen 2a, 2b, 3a, 3b, sowie 5a, 6a, 7a, 8a die Flächenpressung reduziert. Dies führt zu extremer Belast barkeit und Verschleissfestigkeit des Kraftverstärkers. Da auch die Elemente 12, 13 etwa der Breite der Druckfläche 14a entsprechen, wird die Flächenpressung auch im Niederdruckteil des Kraftverstärkers vorteilhaft reduziert.

Ueberdies sind die Kraftübertragungselemente 12, 13 mittels Wälzkörpern (Rollen) 17, 18 am Drucklager 4 abgestützt, so dass bei der seitlichen Auslenkung die Reibkräfte ebenfalls minimiert werden. Die linke Hälfte von Figur 3 zeigt den Kraftverstärker in der Ruhestellung, während aus der rechten Hälfte ersichtlich ist, wie das Drucklager 4 des Kraftverstärkers nach dem Einpressen des Spreizbolzens 14 nach unten verlagert wurde. Wie dargestellt, werden durch Einpressen des Spreizbolzens 14 über die Druckflächen 14a die Nadellager 19, 20 und die Kraftübertragungselemente 12, 13 jeweils der Wälzkörper 9, 10 jeder Kniehebelanordnung 2, 3 nach aussen gepresst, so dass die Kniehebel 5, 6 bzw. 7, 8 in die gestreckte Lage verlagert werden. Während dabei der Spreizbol zen 14 um einen relativ grossen Weg verlagert wird, ist die Auslenkung des Drucklagers infolge der zweifachen Umwandlung durch die Elemente 12, 13, bzw. die Kniehebelanordnung 2, 3 wesentlich geringer.

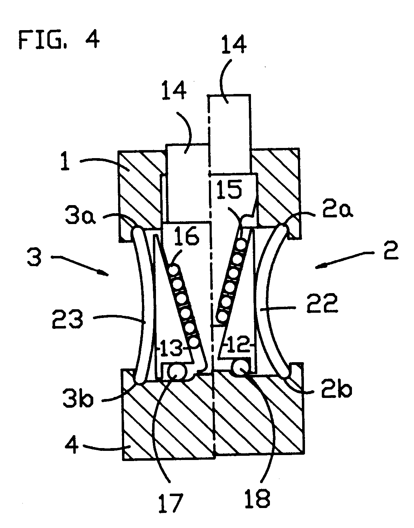

Das Ausführungsbeispiel gemäss Figur 4 entspricht praktisch vollständig dem Ausführungsbeispiel gemäss Figur 1 bis 3. Als Kniehebelanordnung ist dabei lediglich statt der einzelnen Kniehebel je eine durchgehende Blattfeder 22, 23 vorgesehen. Analog dem Ausführungsbeispiel gemäss Figur 3 wird bei der Verlagerung des Spreizbolzens 14 in die Arbeitsstellung das durch die gekrümmten Blattfedern 22, 23 gebildete Knie "gestreckt", wodurch die gewünschte Kraftverstärkung eintritt. Die Blattfedern 22, 23 sind dabei aus einem relativ elastischen Federstahl gebildet, so dass keine grossen Verluste durch die Durchbiegung der Federn auftreten.

Selbstverständlich können statt der Blattfedern 22, 23 gemäss

Figur 4 oder der Kniehebel 5, 6, bzw. 7, 8 gemäss Figur 3 auch andere Kniehebelelemente, wie z.B. Bolzen verwendet werden, ohne dass dabei der Rahmen der Erfindung verlassen würde.

Anordnungen mit nur zwei Kniehebelelementen gemäss Figur 3 oder 4 sind besonders einfach im Aufbau und zeichnen sich durch gute Festigkeitseigenschaften aus. Selbstverständlich sind aber auch Anordnungen mit drei oder mehreren Kniehebeln (erfindungsgemäss) realisierbar.

Sofern die Charakteristik des Kraftübertragers bestimmten Anforderungen angepasst werden soll, ist es auch möglich, die Druckfläche des Spreizbolzens, sowie die Keilfläche des Kraftübertragungselements 12 leicht gekrümmt auszubilden, um z.B. eine progressive oder degressive Charakteristik des Kraftverstärkers zu erreichen. Obwohl sich vor allem bei scheibenförmigen Kniehebelanordnungen rollenförmige Lager besonders bewährt haben, können auch kugelförmige Wälzkörper (z.B. bei den Pfannen 2a, 2b, 3a, 3b oder dem Wälzkörper 9) zur Anwendung kommen. Auch im Niederdruckteil können die Wälzkörper 15, 16 oder 17, 18 als Kugellager ausgebildet sein.

## Patentansprüche

1. Kniehebelkraftverstärker mit mindestens einer Kniehebelanordnung (2, 3), wobei jede Kniehebelanordnung sich einerseits an einem Widerlager (1) und andererseits an einem verschiebbaren, das Hochdruckteil bildenden Drucklager (4) abstützt und mit einem auf das Knie mit etwa senkrecht zu diesem gerichteter Kraft einwirkenden Niederdruckteil, welches einen Spreizbolzen (14) mit wenigstens einer keilförmig zulaufenden, das Knie in die gestreckte Position verlagernden Druckfläche (14a) aufweist, dadurch gekennzeichnet, dass zwischen jedem Knie und der Druckfläche (14a) ein in der Bewegungsrichtung des Sprizbolzens abgestütztes keilförmiges Element (12, 13) zur Kraftübertragung vorgesehen ist, dessen Keilform komplementär-entgegengerichtet zur Keilform des Spreizbolzens (14) verläuft, und dass die Druckflächen (14a) des Spreizbolzens (14) mit der zugeordneten Keilfläche des Elements (12, 13) und mit dazwischen angeordneten Wälzkörpern (15, 16) ein Wälzlager bilden.

2. Kniehebelkraftverstärker nach Anspruch 1, dadurch gekennzeichnet, dass die Kniehebelanordnung (2, 3) je ein Kniehebelpaar (5, 6 bzw. 7, 8 ) aufweist, dessen Kniehebel im Kniebereich durch ein Gelenk (Pfanne 5a, 6a und Wälzkörper 9, bzw. Pfanne 7a, 8a und Wälzkörper 10) miteinander verbunden sind und die über Lagerstellen (2a, 2b, 3a, 3b) am Widerlager (1) bzw. am Drucklager (4) angreifen.

3. Kniehebelkraftverstärker nach Anspruch 1, dadurch gekennzeichnet, dass als Kniehebelanordnung (2, 3) ein zum Spreizbolzen (14) hin gekrümmtes Federelement (22, 23) vorgesehen ist.

4. Kniehebelkraftverstärker nach Anspruch 1 bis 3, dadurch gekennzeichnet, dass jedes Element (12, 13) zur Kraftübertragung an der dem Drucklager zugewandten Keilseite mit wenigstens einem Wälzkörper (17, 18) abgestützt ist, auf welchem es etwa senkrecht zur Bewegungsrichtung des Spreizbolzens (14) verlagerbar ist.

5. Kniehebelkraftverstärker nach Anspruch 2, dadurch gekennzeichnet, dass die Kniehebel (5, 6, 7, 8) als Scheiben ausgebildet sind.

6. Kniehebelkraftverstärker nach einem der Ansprüche 1 bis 5, dadurch gekennzeichnet, dass die Kniehebel (5, 6, 7, 8) im Auflagerbereich abgerundet und in Pfannen (2a, 2b, 3, 3b) im Widerlager (1) bzw. im Drucklager (4) gelagert sind.

7. Kniehebelkraftverstärker nach einem der Ansprüche 1 bis 6 mit einem Kniehebelpaar, dadurch gekennzeichnet, dass das Knie durch einen Wälzkörper (9, 10) gebildet wird.

8. Kniehebelkraftverstärker nach Anspruch 7, dadurch gekennzeichnet, dass die Wälzkörper (9, 10) jeweils mit dem zugeordneten Element (12, 13) in Wirkeingriff stehen.

## Claims

1. Toggle lever power amplifier with at least one toggle lever arrangement (2, 3), each toggle lever arrangement supporting itself on one side on an abutment (1) and on the other side on a displaceable pressure block (4) which forms the high pressure component, and with a low pressure component taking effect on the toggle with a force directed approximately at right angles to said toggle, said low pressure component possessing a spreader (14) with at least one pressure surface (14a) which runs into a wedge shape and which displaces the toggle into the extended position, characterized in that a wedge shaped element (12, 13), which is supported in the direction of movement of the spreader, is provided between each toggle and the pressure surface (14a) for the transmission of power, the wedge shape of which runs to complementarily act in the opposite direction to the wedge shape of the spreader (14), and that the pressure surfaces (14a) of the spreader (14) form a roller bearing together with the allocated wedge surface of the element (12, 13) and with roller bodies arranged between (15, 16).

2. Toggle lever power amplifier according to claim 1, characterized in that the toggle lever arrangement (2, 3) in each case possesses a toggle lever pair (5, 6 respectively 7, 8), the toggle levers of which are connected with one another in the toggle area by a linkage (socket 5a, 6a and roller body 9, respectively socket 7a, 8a and roller body 10) and which engage via bearing points (2a, 2b, 3a, 3b) on the abutment (1), respectively on the pressure block (4).

3. Toggle lever power amplifier according to claim 1, characterized in that a spring element (22, 23), which is curved inwards towards the spreader (14), is provided as a toggle lever arrangement (2, 3).

4. Toggle lever power amplifier according to claims 1 to 3, characterized in that each element (12, 13) is supported, for the transmission of power, on the side of the wedge which is orientated towards the pressure block with at least one roller body (17, 18) upon which it is able to be displaced approximately at right angles to the direction of movement of the spreader (14).

5. Toggle lever power amplifier according to claim 2, characterized in that the toggle levers (5, 6, 7, 8) are formed as disks.

6. Toggle lever power amplifier according to one of the claims 1 to 5, characterized in that the toggle levers (5, 6, 7, 8) are rounded off in the area of the bearing and are mounted in sockets (2a, 2b, 3, 3b) in the abutment (1) respectively in the pressure block (4).

7. Toggle lever power amplifier according to one of the claims 1 to 6 with a toggle lever pair, characterized in that the toggle is formed by a roller body (9, 10).

8. Toggle lever power amplifier according to claim 7, characterized in that the roller bodies (9, 10) in each case are engaged to take effect with an allocated element (12, 13).

## Revendications

1. Amplificateur de puissance à genouillère comportant au moins un dispositif de genouillère (2, 3), chaque dispositif de genouillère étant en appui d'un côté contre une butée (1) et de l'autre côté contre un palier de pression mobile (4) constituant l'élément haute pression, et un élément basse pression qui agit sur la rotule suivant une force sensiblement perpendiculaire à celle-ci et qui présente un boulon d'expansion (14) pourvu d'au moins une surface de pression cunéiforme (14a) amenant la rotule en position tendue, caractérisé en ce qu'il est prévu, entre chaque rotule et la surface de pression (14a), un élément cunéiforme (12, 13) en appui dans le sens de déplacement du boulon d'expansion, pour la transmission de la force, dont la forme de coin est opposée et complémentaire par rapport à celle du boulon d'expansion (14), et en ce que les surfaces de pression (14a) du boulon d'expansion (14) définissent, avec la surface cunéiforme associée de l'élément (12, 13) et avec des organes de roulement (15, 16) disposés entre elles, un palier à roulement.

2. Amplificateur de puissance à genouillère selon la revendication 1, caractérisé en ce que le dispositif de genouillère (2, 3) comporte une paire de leviers de genouillère (respectivement 5, 6 et 7, 8) qui sont reliés entre eux, dans la zone formant rotule, par une articulation (respectivement cavité 5a, 6a et organe de roulement 9, et cavités 7a, 8a et organe de roulement 10), et qui agissent par l'intermédiaire de points d'appui (2a, 2b, 3a, 3b) respectivement sur la butée (1) et la palier de pression (4).

3. Amplificateur de puissance à genouillère selon la revendication 1, caractérisé en ce qu'il est prévu, comme dispositif de genouillère (2, 3), un élément élastique (22, 23) courbé en direction du boulon d'expansion (14).

4. Amplificateur de puissance à genouillère selon les revendications 1 à 3, caractérisé en ce que chaque élément (12, 13) prévu pour la transmission de force est supporté, au niveau de la face du coin tournée vers le palier de pression, à l'aire d'au moins un organe de roulement (17, 18) sur lequel il est apte à être déplacé sensiblement perpendiculairement au sens de déplacement du boulon d'expansion (14).

5. Amplificateur de puissance à genouillère selon la revendication 2, caractérisé en ce que les leviers de genouillère (5, 6, 7, 8) sont conçus comme des plaques.

6. Amplificateur de puissance à genouillère selon l'une des revendications 1 à 5, caractérisé en ce que les leviers de genouillère (5, 6, 7, 8) sont arrondis dans leur zone de fondement et sont montés dans des cavités (2a, 2b, 3, 3b) prévues dans la butée (1) et dans le palier de pression (4).

7. Amplificateur de puissance à genouillère selon l'une des revendications 1 à 6, comportant une paire de leviers de genouillère, caractérisé en ce que la rotule est formée par un corps de roulement (9), 10).

8. Amplificateur de puissance à genouillère selon la revendication 7, caractérisé en ce que les organes de roulement (9, 10) sont en prise fonctionnelle avec les éléments respectifs associés (12, 13).
